# EUROPÄISCHE PATENTANMELDUNG

(11) **EP 4 455 407 A1**
(43) Veröffentlichungstag der Anmeldung: **30.10.2024**
(21) Anmeldenummer: 23170046.9
(22) Anmeldetag: 26.04.2023
(51) Int. Cl.: E02D 17/13, E02F 3/20, H02K 9/10, H02K 9/197

(54) **SCHLITZWANDFRÄSVORRICHTUNG UND VERFAHREN ZUM ERSTELLEN EINES FRÄSSCHLITZES IM BODEN**

(71) Anmelder: BAUER Maschinen GmbH, 86529 Schrobenhausen (DE)
(72) Erfinder: BEIER, Johannes, 86529 Schrobenhausen (DE); SOIER, Sebastian, 86529 Schrobenhausen (DE)
(74) Vertreter: Wunderlich & Heim Patentanwälte PartG mbB

(57) **Zusammenfassung**

Die Erfindung betrifft eine Schlitzwandfräsvorrichtung mit einer Schlitzwandfräse mit einem Rahmen, zwei Paaren von Fräsrädern, welche an einem unteren Bereich des Rahmens drehbar gelagert sind, mindestens einem Fräsradantrieb, durch welchen die Fräsräder drehend antreibbar sind, wobei der Fräsradantrieb einen Elektromotor zum Erzeugen der Drehbewegung aufweist, und einem Kühlkreislauf zum Kühlen des mindestens einen Elektromotors mit einem im Kühlkreislauf geführten Kühlmedium. Die Erfindung ist dadurch **gekennzeichnet** , dass eine Steuereinheit zur Steuerung des Kühlkreislaufes angeordnet ist, dass durch die Steuereinheit ein Betriebszustand des mindestens einen Elektromotors erfassbar ist, und dass die Steuereinheit ausgebildet ist, abhängig von dem erfassten Betriebszustand einen Volumenstrom an Kühlmedium zu dem mindestens einen Elektromotor variabel zu steuern.

## Beschreibung

Die Erfindung betrifft eine Schlitzwandfräsvorrichtung mit einer Schlitzwandfräse mit einem Rahmen, zwei Paaren von Fräsrädern, welche an einem unteren Bereich des Rahmens drehbar gelagert sind, mindestens einem Fräsradantrieb, durch welchen die Fräsräder drehend antreibbar sind, wobei der Fräsradantrieb einen Elektromotor zum Erzeugen der Drehbewegung aufweist, und einem Kühlkreislauf zum Kühlen des mindestens einen Elektromotors mit einem im Kühlkreislauf geführten Kühlmedium, gemäß dem Oberbegriff des Anspruchs 1.

Die Erfindung betrifft weiterhin ein Verfahren zum Erstellen eines Frässchlitzes im Boden mit einer Schlitzwandfräsvorrichtung gemäß dem Oberbegriff des Anspruchs 13.

Aus der DE 34 24 999 A1 ist eine Schlitzwandfräsvorrichtung mit einer Schlitzwandfräse bekannt, bei welcher die Fräsräder über einen Elektromotor angetrieben werden können, welcher als ein sogenannter Aufsatzmotor oberhalb der Fräsräder angeordnet ist. Über ein Getriebe kann das Drehmoment an die Fräsräder übertragen werden, welche an der Unterseite eines Rahmens an einem Lagerschild drehbar gelagert sind.

Eine gattungsgemäße Schlitzwandfräsvorrichtung ist in der EP 3 467 209 A1 beschrieben. Bei dieser Schlitzwandfräse werden die Fräsräder über sogenannte Nabenmotoren angetrieben, welche in einem Nabenbereich der trommelförmigen Fräsräder angeordnet sind. Bei der Verwendung von Elektromotoren, insbesondere in einem Nabenbereich der Fräsräder, sind diese aktiv zu kühlen. Zur Kühlung ist ein Kühlkreislauf beschrieben, bei welchem eine Kühleinrichtung an einem Trägergerät außerhalb des Frässchlitzes angeordnet ist. Von der Kühleinrichtung wird über Leitungen ein Kühlmedium nicht nur an die elektrischen Nabenmotoren, sondern auch an den elektrischen Antrieb einer Absaugpumpe geleitet. Durch den Kühlkreislauf kann Wärme von den Elektromotoren über die Kühleinrichtung an die Umgebung außerhalb des Frässchlitzes abgegeben werden.

Schlitzwandfräsen werden typischerweise beim Fräsen mit einem relativ eng begrenzten Drehzahlbereich von etwa 50 bis 60 Umdrehungen pro Minute mit relativ geringen Drehzahlabweichungen nach oben und unten eingesetzt und betrieben. Ein Kühlsystem kann somit bei einer Schlitzwandfräse relativ einfach auf einen erwarteten, weitgehend gleichbleibenden Kühlbedarf ausgelegt werden.

Der Erfindung liegt die **Aufgabe** zugrunde, eine Schlitzwandfräsvorrichtung und ein Verfahren anzugeben, mit welchen eine Schlitzwandfräsvorrichtung besonders effizient und flexibel einsetzbar ist.

Die Aufgabe wird zum einen durch eine Schlitzwandfräsvorrichtung mit den Merkmalen des Anspruchs 1 und zum anderen durch ein Verfahren mit den Merkmalen des Anspruchs 13 gelöst. Bevorzugte Ausführungsformen der Erfindung sind in den jeweils abhängigen Ansprüchen angegeben.

Die erfindungsgemäße Schlitzwandfräsvorrichtung ist dadurch gekennzeichnet, dass eine Steuereinheit zur Steuerung des Kühlkreislaufes angeordnet ist, dass durch die Steuereinheit ein Betriebszustand des mindestens einen Elektromotors erfassbar ist und dass die Steuereinheit ausgebildet ist, abhängig von dem erfassten Betriebszustand einen Volumenstrom an Kühlmedium zu dem mindestens einen Elektromotor variabel zu steuern.

Eine Grundidee der Erfindung liegt darin, eine Schlitzwandfräse einer Schlitzwandfräsvorrichtung einerseits kompakt und andererseits besonders flexibel auszugestalten. Dies wird dadurch erreicht, dass zum Antreiben der Fräsräder mindestens ein Elektromotor zum Erzeugen der Drehbewegung der Fräsräder vorgesehen wird, wobei eine variable, vom Betriebszustand des Elektromotors abhängige Kühlung vorgesehen wird. Die Schlitzwandfräse kann dabei nicht nur zu einem normalen Fräsbetrieb mit einem begrenzten Band an Drehzahlen und Drehmomenten, sondern etwa auch zum Vermischen von Suspension mit Fräsklein im Frässchlitz mit deutlich höheren Drehzahlen und anderen Drehmomenten eingesetzt werden. Neben dem Vorsehen von kompakten Elektromotoren wird dies maßgeblich dadurch erzielt, dass eine Steuereinheit zum variablen Steuern des Kühlkreislaufes des mindestens einen Elektromotors angeordnet ist. Durch die Steuereinheit wird ein Betriebszustand des Elektromotors erfasst. Der Betriebszustand kann vorzugsweise die Temperatur des Elektromotors umfassen, welche direkt am Motor oder indirekt durch das aus dem Elektromotor austretende Kühlmedium erfasst werden kann. Abhängig von dem Betriebszustand kann ein Volumenstrom an Kühlmedium zu dem mindestens einen Elektromotor variabel gesteuert und eingestellt werden. Hierdurch kann ein effizienter Betrieb des oder der Elektromotore in einem breiten Belastungsband erzielt und so vielfältige Einsatzmöglichkeiten der Schlitzwandfräse erreicht werden. Insbesondere bei mehreren eingesetzten Elektromotoren kann eine individuelle Kühlung jedes einzelnen Elektromotors vorgesehen werden.

Im Sinne der Erfindung ist der Begriff des Rahmens der Schlitzwandfräse breit zu verstehen und bezieht sich nicht allein auf eine gerüstartige Rahmenkonstruktion, wie sie bei Schlitzwandfräsen in relativ großen Führungsrahmen mit Führungsplatten eingesetzt wird. Der Begriff Rahmen umfasst vielmehr auch kompakte gehäuseartige Grundkomponenten oder Rahmen einer Schlitzwandfräse, an welchen die Fräsräder und Antriebseinheiten sowie eventuelle Absaug- oder Zuführeinrichtung angeordnet sind. Der Rahmen einer Schlitzwandfräse kann vorzugsweise zum Führen der Schlitzwandfräse mit Führungselementen gegenüber der umgebenden Schlitzwand vorgesehen sein. Der Rahmen kann jedoch auch kleinere Querschnittsabmessungen als der Fräsquerschnitt aufweisen, wobei die Schlitzwandfräse ohne Führungsfunktion des Rahmens betrieben wird.

Eine besonders bevorzugte Ausführungsform der Erfindung besteht darin, dass durch die Steuereinheit eine Kühlmediumpumpe gesteuert ist, welche ein Kühlmedium zu und/oder von dem mindestens einen Elektromotor fördert. Die Kühlmediumpumpe kann dabei durch einen Motor, insbesondere durch einen elektrischen Motor angetrieben werden. Der Motor der Kühlmittelpumpe wird von der Steuereinheit entsprechend einer Programmvorgabe und dem erfassten Betriebszustand des zu kühlenden Elektromotors angesteuert. Besteht ein hoher Kühlbedarf, so kann ein entsprechend großer Volumenstrom an Kühlmedium zugeführt bzw. abgeführt werden, während bei einem verringerten Kühlungsbedarf der Volumenstrom entsprechend reduziert wird. Auf diese Weise kann der Elektromotor zum Drehen der Fräsräder bei einer effizienten und weitgehend gleichbleibenden Betriebstemperatur gehalten und eingesetzt werden. Das Kühlmedium kann grundsätzlich ein Gas und vorzugsweise eine Flüssigkeit sein. In einem einfachen Fall kann Wasser als Kühlmedium verwendet werden, wobei vorzugsweise spezielle Kühlflüssigkeiten zum Einsatz kommen können.

Eine alternative oder ergänzende Möglichkeit zum variablen Einstellen des Volumenstroms liegt nach einer weiteren Variante der Erfindung darin, dass durch die Steuereinheit mindestens ein Stellventil gesteuert wird, durch welches ein Kreislaufstrom des Kühlmediums in einen ersten Teilstrom und mindestens einen zweiten Teilstrom variierbar aufgeteilt ist, wobei der erste Teilstrom zu dem mindestens einen Elektromotor gebildet ist. Das Stellventil kann beispielsweise elektromagnetisch angesteuert werden, so dass durch die Steuereinheit von einem Kreislaufstrom ein definierter erster Teilstrom an Kühlmedium zu dem mindestens einen Elektromotor geleitet werden kann. Durch weitere Stellventile können auch weitere Teilströme etwa aus einer Haupt-Kreislaufleitung abgezweigt werden, so dass beim Vorsehen mehrerer Elektromotore eine individuelle Kühlung jedes einzelnen Elektromotors erreicht werden kann. Der verbleibende mindestens eine zweite Teilstrom kann in einem einfachen Fall als ein Rücklaufstrom zu einer Ausgangs-Kühleinrichtung rückgeführt werden. Der mindestens eine zweite Teilstrom kann auch zu weiteren Kühlzwecken anderer Komponenten eingesetzt werden. Abgezweigte Teilströme können wieder zum Bilden des Kreislaufs rückgeleitet werden.

Besonders bevorzugt ist es nach einer Weiterbildung der Erfindung, dass zumindest ein zweiter Teilstrom an Kühlmedium zu einem Getriebe des Fräsradantriebes geleitet wird, um ein Getriebeöl in dem Getriebe zu kühlen. Ein entsprechendes Getriebe, welches Getriebezahnräder in einem mit Getriebeöl befülltem Getriebegehäuse umfasst, kann etwa sowohl bei einem Aufsatzmotor als auch bei einem Nabenmotor zur Drehmomentübertragung und Drehmomentwandlung angeordnet sein. Durch eine Kühlung des Getriebeöls innerhalb des Getriebes kann ein ansonsten notwendiger Getriebeölkreislauf mit Kühlung entfallen. Dadurch kann eine besonders kompakte Anordnung einer Schlitzwandfräse mit einem Fräsgetriebe erzielt werden.

Eine weitere vorteilhafte Ausführungsform der Erfindung besteht darin, dass der Fräsradantrieb ein Getriebe mit einem Getriebegehäuse aufweist, in welchem mindestens ein Wärmetauscher, insbesondere für einen zweiten Teilstrom aus dem Kühlkreislauf, zum Kühlen des Getriebeöls angeordnet ist. Dies ermöglicht ein besonders effizientes Kühlen des Getriebeöls.

Besonders zweckmäßig ist es nach einer Weiterbildung der Erfindung, dass der Wärmetauscher innerhalb des Getriebegehäuses Wärmetauschrippen aufweist. Innerhalb des Fräsradgetriebes ist somit ein eigenständiger Wärmetauscher vorgesehen, welcher durch ein Kühlmedium, welches auch zum Kühlen des Elektromotors eingesetzt wird, das Getriebeöl innerhalb des Getriebegehäuses unmittelbar kühlen kann.

Eine besonders effiziente Steuerung wird nach einer Weiterbildung der Erfindung dadurch erzielt, dass mindestens ein Temperatursensor vorgesehen ist, welcher im Bereich des mindestens einen Elektromotors zum Erfassen der Temperatur des Elektromotors und/oder an dem Kühlkreislauf zum Erfassen der Temperatur des Kühlmediums, insbesondere nach dem Austritt aus dem Elektromotor, angeordnet ist, und dass der mindestens eine Temperatursensor mit der Steuereinheit in Verbindung steht. Vorzugsweise sind mehrere Temperatursensoren angeordnet, welche sowohl an dem Elektromotor als auch an dem Kühlkreislauf positioniert sein können.

Über einen Temperatursensor an dem Elektromotor kann die Temperatur des Stators, des Rotors oder eines anderen geeigneten Bauteils des Elektromotors unmittelbar erfasst werden. Hierzu kann der mindestens eine Temperatursensor an dem entsprechenden Bauteil angeordnet sein. Über einen Temperatursensor am Kühlkreislauf kann eine Temperatur des Kühlmediums vorzugsweise am Austritt aus dem Elektromotor erfasst werden, wobei aus der Temperatur des Kühlmediums mittelbar ein Rückschluss auf die Temperatur des Elektromotors erfolgen kann. Der erfasste Temperaturwert kann der Steuereinheit zugeleitet werden, um etwa bei einer ansteigenden übermäßigen Temperatur dem Elektromotor einen größeren Volumenstrom an Kühlmedium zuzuleiten.

Insbesondere kann beim Einsatz mehrerer Elektromotoren, etwa beim Einsatz mehrerer Nabenmotoren, bei jedem Elektromotor die Temperatur unmittelbar und/oder mittelbar erfasst und der Steuereinheit zugeleitet werden. Dies ermöglicht eine individuelle Einstellung der Temperatur für jeden Elektromotor. Dies erlaubt einen besonders effizienten und langlebigen Betrieb der Elektromotoren.

Alternativ oder ergänzend zu einer Temperaturmessung ist es nach einer Ausführungsvariante der Erfindung vorteilhaft, dass durch die Steuereinheit eine Drehzahl und/oder ein Drehmoment zum Drehen der Fräsräder zum Steuern des Kühlkreislaufs erfassbar ist. Anhand der erfassten Werte zur Drehzahl und/oder zum Drehmoment zum Drehen der Fräsräder kann durch die Steuereinheit frühzeitig ermittelt werden, ob eine erhöhte Wärmeentwicklung an dem mindestens einen Elektromotor entsteht. So ist bei einem Anstieg der Drehzahl und des Drehmomentes eine höhere Wärmeentwicklung an dem Elektromotor zu erwarten. Somit kann die Steuereinheit noch vor einem tatsächlichen Temperaturanstieg den Volumenstrom an Kühlmedium zu dem mindestens einen Elektromotor frühzeitig und bedarfsgerecht einstellen, also erhöht bzw. gesenkt werden, wobei einem Temperaturanstieg entgegengewirkt wird.

Grundsätzlich kann die mindestens eine Kühlmediumpumpe an einer beliebigen Stelle an der Schlitzwandfräsvorrichtung angeordnet sein. Für ein besonders effizientes Ansprechverhalten des Kühlkreislaufes ist es nach einer Ausführungsform der Erfindung vorteilhaft, dass die Kühlmediumpumpe an einem Rahmen der Schlitzwandfräse angeordnet ist. Die Kühlmediumpumpe kann so räumlich nahe zu dem mindestens einen Elektromotor zum Antreiben der Fräsräder positioniert sein.

Grundsätzlich kann an der Schlitzwandfräse im Bereich der Fräsräder eine Absaugeinrichtung zum Absaugen des abgetragenen Bodenmaterials, auch Fräsklein genannt, angeordnet sein. Das Fräsklein wird so aus dem Boden nach über Tage abgefördert und kann entsorgt oder nach einer Aufbereitung wieder in den Frässchlitz rückgeführt werden.

Eine weitere vorteilhafte Ausgestaltung einer erfindungsgemäßen Schlitzwandfräse besteht darin, dass an dem Rahmen im Bereich der Fräsräder eine Zuführöffnung zum Zuführen einer Suspension angeordnet ist und dass die Schlitzwandfräse zum Mischen von abgefrästem Boden mit zugeführter Suspension ausgebildet ist, um in dem Frässchlitz einen Bodenmörtel zu bilden. Bei dieser Anordnung kann die Fräse somit nicht nur zum Abtragen von Bodenmaterial und zum Erstellen des Schlitzes eingesetzt werden, sondern auch zum Vermischen des Fräskleins mit über die Zuführöffnung zugeführter Suspension zum Bilden eines Bodenmörtels. Die Suspension kann eine aushärtende Suspension sein, etwa eine Zementsuspension. Der gebildete Bodenmörtel kann nach dem Ziehen der Schlitzwandfräse aus dem Frässchlitz in diesem verbleiben und zum Bilden eines Schlitzwandsegmentes aushärten.

Nach einer Weiterbildung der Erfindung kann ein besonders effizientes Kühlen dadurch erzielt werden, dass ein Trägergerät vorgesehen ist, an welchem die Schlitzwandfräse gehalten ist, und dass an dem Trägergerät eine Kühleinrichtung zum Kühlen des Kühlmediums angeordnet ist. Über die Kühleinrichtung kann mittels eines Wärmetauschers die vom Kühlmedium aufgenommene Wärme an die Umgebung abgegeben werden, so dass das Kühlmedium zum weiteren Kühlen der Elektromotore im Kreislauf wieder zu der Schlitzwandfräse rückgeführt werden kann. Grundsätzlich kann die Kühleinrichtung aber auch am Rahmen der Schlitzwandfräse selbst angeordnet sein, wobei die Wärme dann unmittelbar in eine Suspension in dem Frässchlitz abgegeben werden kann.

Eine besonders kompakte Anordnung wird nach einer Ausführungsform der Erfindung dadurch erzielt, dass jedem Fräsrad ein Elektromotor zugeordnet ist, welcher als ein Nabenmotor ausgebildet ist. Eine Abtriebswelle des Nabenmotors kann das jeweils zugeordnete Fräsrad unmittelbar oder unter Zwischenschaltung eines Getriebes antreiben, welches insbesondere ein Zahnradgetriebe, insbesondere ein Untersetzungsgetriebe ist.

Die Schlitzwandfräse kann grundsätzlich über ein Halteseil an einem Trägergerät vertikal verstellbar gehalten sein. Eine Führung kann dabei mittels des Rahmens bewirkt werden, welcher mit Führungsplatten zum Kontaktieren und Führen entlang der Wände des gefrästen Schlitzes ausgebildet ist. Bevorzugt ist es nach einer Weiterbildung der Erfindung, dass die Schlitzwandfräse an einer rohrförmigen Führungsstange gehalten ist, innerhalb welcher mindestens eine Leitung zum Bilden des Kühlkreislaufes verläuft. Hierdurch kann eine in bestimmten Fällen unerwünschte Wärmeübertragung der Wärme des Kühlmediums in die Suspension des Frässchlitzes bei der Rückleitung zur Kühleinrichtung weitgehend vermieden werden. Die Führungsstange kann zur Führung der Schlitzwandfräse beitragen oder diese bewirken, muss dies aber nicht in jedem Fall.

Die Erfindung betrifft weiterhin ein Verfahren zum Erstellen eines Frässchlitzes im Boden mit einer Schlitzwandfräsvorrichtung, wobei eine erfindungsgemäße Schlitzwandfräsvorrichtung verwendet wird, wie sie vorausgehend beschrieben und/oder in den Ansprüchen angegeben ist.

Mit dem erfindungsgemäßen Verfahren können die zuvor beschriebenen Vorteile beim Betrieb einer Schlitzwandfräsvorrichtung beziehungsweise beim Erstellen eines Frässchlitzes erreicht werden. Die zuvor beschriebene erfindungsgemäße Schlitzwandfräsvorrichtung ist auch vorzugsweise zur Durchführung des erfindungsgemäßen Verfahrens ausgebildet.

Eine besonders bevorzugte Verfahrensvariante des erfindungsgemäßen Verfahrens besteht darin, dass ein Volumenstrom an Kühlmedium zu dem Elektromotor abhängig von einer Temperatur des Elektromotors und/oder einer Temperatur des Kühlmediums und/oder einer Drehzahl und/oder einem Drehmoment zum Drehen der Fräsräder gesteuert und eingestellt wird. Dies ermöglicht einen effizienten Betrieb des mindestens einen Elektromotors in einem geeigneten Betriebstemperaturbereich. Dies reduziert den Wartungsaufwand und erhöht die Lebensdauer des Elektromotors.

Grundsätzlich kann das Verfahren in vielfältiger Weise eingesetzt werden. Besonders vorteilhaft ist es nach einer Weiterbildung der Erfindung, dass in dem erstellten Frässchlitz eine Schlitzwand gebildet wird. Insbesondere kann die Schlitzwand durch einen Bodenmörtel gebildet werden, welcher im Frässchlitz in situ durch die Fräsräder durch Vermischen aushärtbarer Suspension gebildet wird. Nach Rückziehen der Schlitzwandfräse aus dem Frässchlitz mit dem so gebildeten Bodenmörtel kann dieser zu einem Schlitzwandsegment aushärten.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische perspektivische Ansicht einer erfindungsgemäßen Schlitzwandfräsvorrichtung;
- Fig. 2: eine schematische Darstellung zu einer Schlitzwandfräse für die erfindungsgemäße Schlitzwandfräsvorrichtung;
- Fig. 3: eine perspektivische und teilweise geschnittene Ansicht einer Schlitzwandfräse für die Erfindung;
- Fig. 4: einen schematischen Längsschnitt durch die Fräsräder an einem Lagerschild der Schlitzwandfräse nach Figur 3;
- Fig. 5: eine perspektivische geschnittene Ansicht zu einem Nabenmotor zum Antrieb von Fräsrädern der Schlitzwandfräse von Figur 4; und
- Fig. 6: eine Detailquerschnittsansicht zu einem Kühlkreislauf im Bereich der Fräsräder.

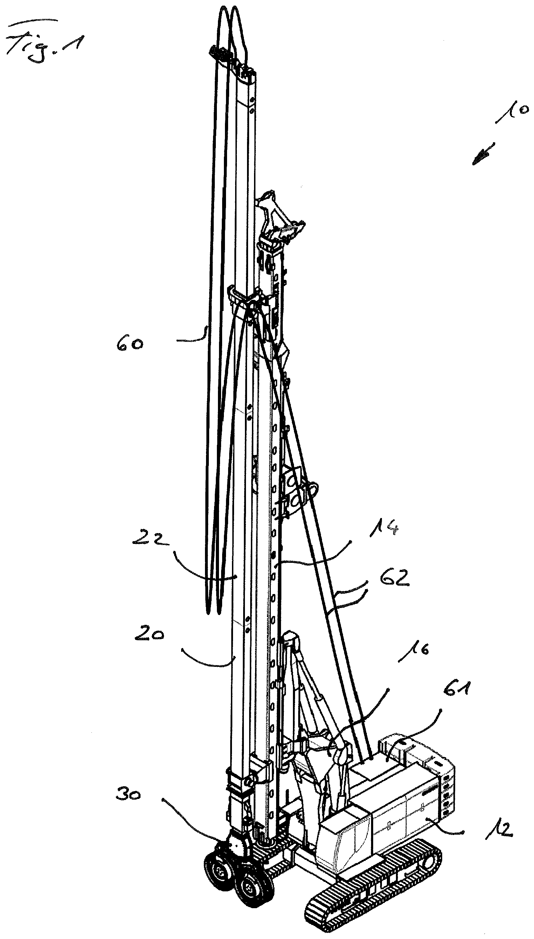

Eine erfindungsgemäße Schlitzwandfräsvorrichtung 10 mit einem Trägergerät 12 ist in Figur 1 dargestellt. Das Trägergerät 12 kann ein Raupenfahrwerk und einen darauf drehbar gelagerten Oberwagen mit einem Bedienstand aufweisen. An dem Bedienstand kann eine Steuereinheit angeordnet sein, welche insbesondere zur Steuerung einer Kühlung einer Schlitzwandfräse 30 im Betrieb ausgebildet sein kann.

An dem Trägergerät 12 kann ein im Betrieb im wesentlichen vertikaler Mast 14, welcher als ein Mäkler mit einer vorderen Linearführung ausgebildet sein kann, über einen Anstellmechanismus 16 verstellbar angelenkt sein. Entlang des Mastes 14 kann zum Bilden einer Halteeinrichtung 20 eine Führungsstange 22 vertikal verschiebbar gehalten und gelagert sein. Am unteren Ende der Halteeinrichtung 20 kann an der Führungsstange 22 die Schlitzwandfräse 30 angebracht sein.

An dem Trägergerät 12, insbesondere an dem Oberwagen des Trägergerätes 12, kann eine grundsätzlich bekannte Kühleinrichtung 61 mit einem Wärmetauscher und mindestens einer Kühlmediumpumpe angeordnet sein. Von der Kühleinrichtung 61 können zum Bilden eines Kühlkreislaufes 60 zwischen der Schlitzwandfräse 30 und der Kühleinrichtung 61 Kühlleitungsschläuche 62 zum Mast 14 bis zu einem oberen Ende der Halteeinrichtung 20, insbesondere der Führungsstange 22, geführt sein. Innerhalb der rohrförmigen Führungsstange 22 können sich entsprechende Leitungen bis zu der Schlitzwandfräse 30 erstrecken, welche nachfolgend näher beschrieben wird.

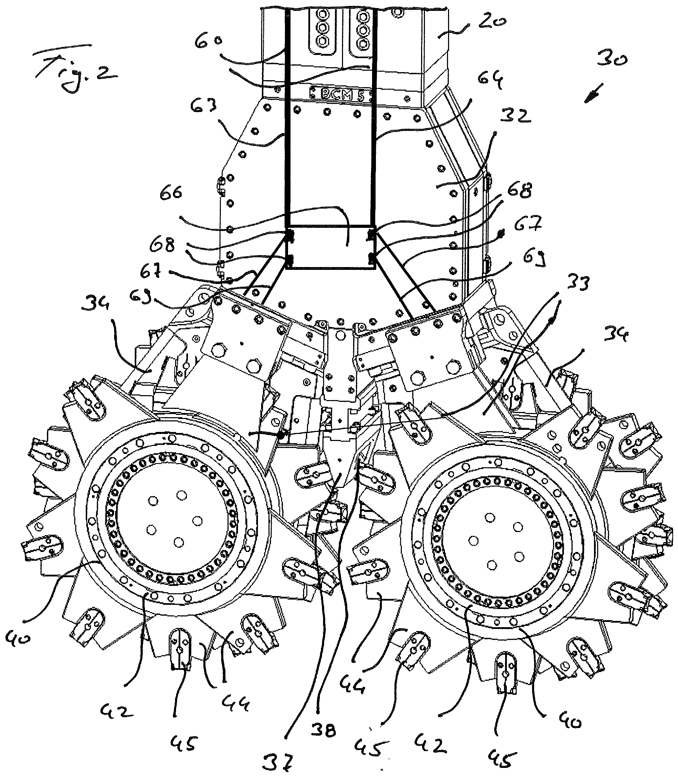

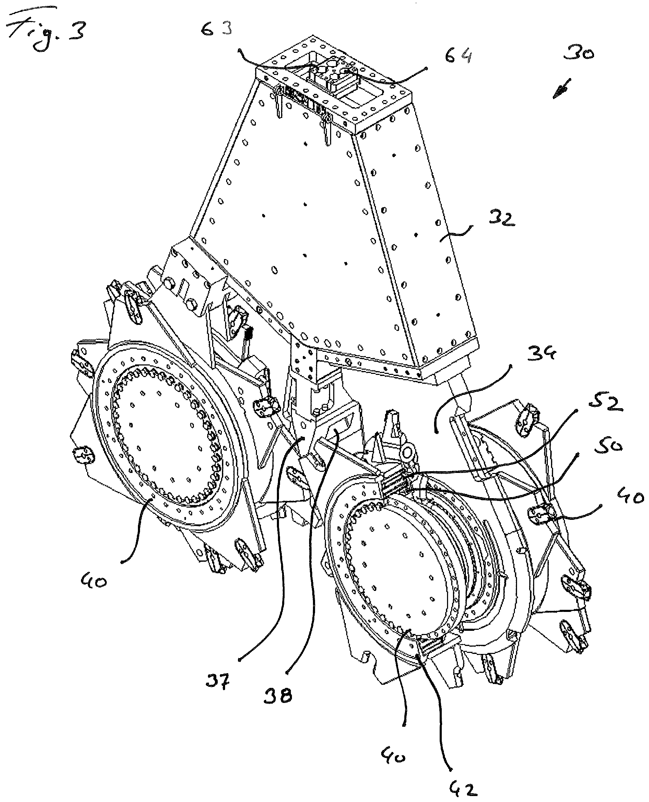

Der grundsätzliche Aufbau einer Schlitzwandfräse 30 wird im Zusammenhang mit den Figuren 2 bis 5 erläutert. Die Schlitzwandfräse 30 weist einen Rahmen 32 auf, welcher im dargestellten Ausführungsbeispiel kompakt und gehäuseartig ausgebildet ist. Der dargestellte Rahmen 32 weist einen Querschnitt auf, welcher kleiner als der Querschnitt des hergestellten Frässchlitzes ist. Der Rahmen 32 kann aber auch gerüstartig mit Führungsplatten ausgebildet sein, welche zur Führung großflächig an den Wänden des Frässchlitzes zur Anlage kommen können.

An einer Unterseite des Rahmens 32 können zwei plattenförmige Lagerschilde 34 angeordnet sein, an welchen jeweils ein Paar von Fräsrädern 40 drehbar gelagert sind. An jeder Seite eines Lagerschildes 34 kann ein Fräsrad 40 koaxial zu dem jeweils gegenüberliegenden Fräsrad 40 auf der anderen Seite des Lagerschildes 34 drehbar gelagert sein.

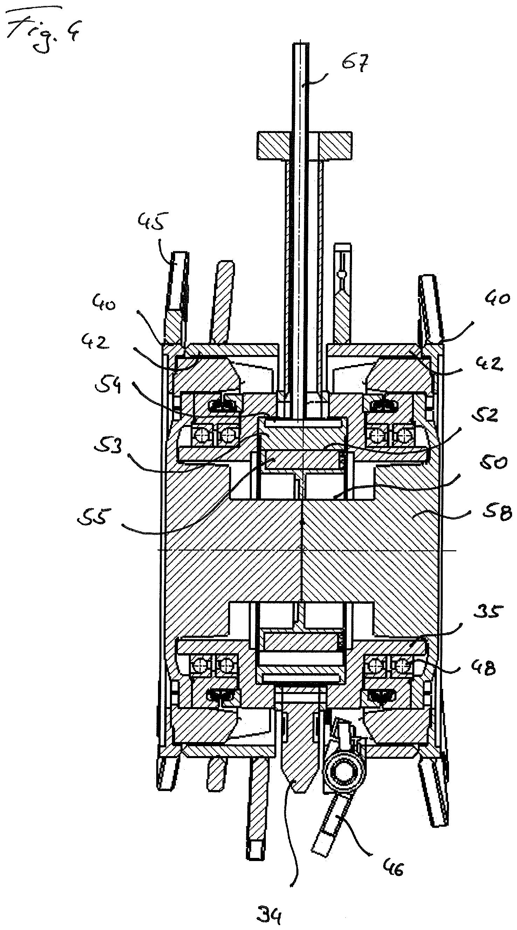

Jedes Fräsrad 40 weist eine trommelförmige Fräsradnabe 42 auf, an deren Außenseite radial vorstehende plattenförmige Zahnhalterungen 44 mit jeweils mindestens einem Fräszahn 45 angebracht sein können. In dem an das Lagerschild 34 angrenzenden Bereich des Fräsrades 40 kann mindestens ein grundsätzlich bekannter Klappzahn 46 an jedem Fräsrad 40 angeordnet sein. Der Klappzahn 46 kann zwischen einer Rückzugsstellung und einer in Figur 4 dargestellten ausgeklappten Stellung verstellbar sein, bei welcher dieser entsprechend der Darstellung von Figur 4 Bodenmaterial unterhalb des Lagerschildes 34 abtragen kann.

Zwischen den beiden Paaren von Fräsrädern 40 kann an der Unterseite des Rahmens 32 eine Zuführeinrichtung 37 mit mindestens einer Zuführöffnung 38 zum Zuführen einer Frässuspension angeordnet sein. Weiterhin können an der Unterseite des Rahmens 32 plattenförmige Abstreifer 33 angebracht sein, welche in einem Bereich zwischen die reihenartig angeordneten Zahnhalterungen 44 und Fräszähne 45 hineinragen, um anhaftendes Bodenmaterial abzustreifen. Es kann eine aushärtbare Suspension zugeführt werden, welche durch die Drehbewegung der Fräsräder 40 in situ mit dem abgefrästen Bodenmaterial zu einem Bodenmörtel vermischt wird.

Die plattenförmigen Lagerschilde 34 weisen zu jeder Plattenseite einen vorstehenden Lagerring 35 auf, an welchem jeweils ein Fräsrad 40 über Drehlager 48 drehbar gelagert und gehalten ist.

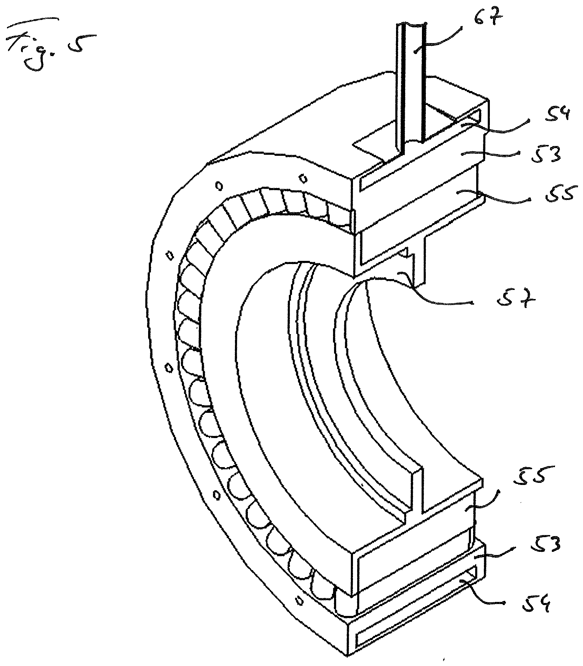

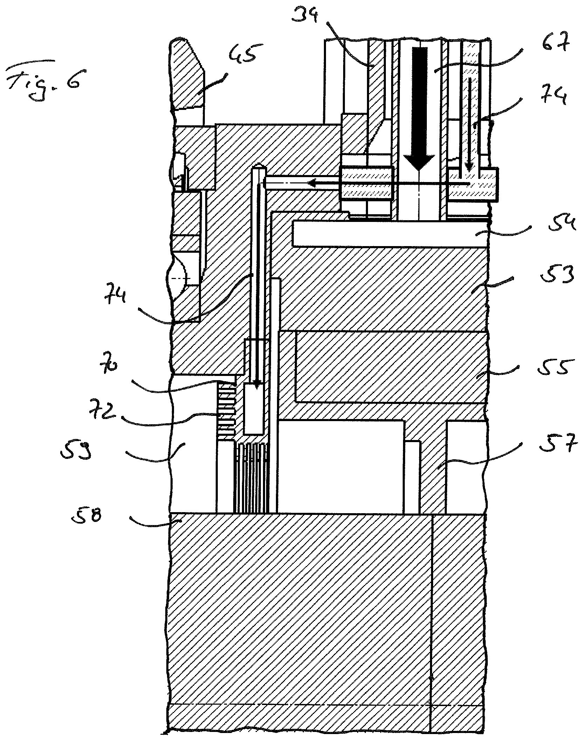

Zum drehenden Antreiben kann jedes einzelne Fräsrad 40 oder ein Paar von Fräsrädern 40 an einem Lagerschild 34 mit einem Fräsradantrieb 50 in Verbindung stehen, welcher einen als Nabenmotor ausgebildeten Elektromotor 52 aufweisen kann. Der Elektromotor 52 kann einen äußeren ringförmigen Stator 53 und einen darin drehbar gelagerten und angetriebenen Rotor 55 umfassen. Über einen inneren ringförmigen Abtriebsflansch 57, welcher in den Figuren 5 und 6 dargestellt ist, kann ein vom Elektromotor 52 erzeugtes Drehmoment über ein nur schematisch angedeutetes Getriebe 58, insbesondere ein Untersetzungsgetriebe mit kämmenden Zahnradelementen, auf die Fräsräder 40 übertragen werden.

Zur Kühlung des Fräsradantriebes 50 ist in dem dargestellten Ausführungsbeispiel an dem ringförmigen Stator 53 des Elektromotors 52 ein äußerer ringförmiger Kühlkanal 54 angeordnet, durch welchen ein Kühlmedium, insbesondere eine Kühlflüssigkeit, den Stator 53 zur Kühlung des Elektromotors 52 umströmen kann. Der Kühlkanal 54 kann vorzugsweise mit einem flachen rechteckigen Strömungsquerschnitt oder Kanalquerschnitt ausgebildet sein, um eine möglichst gute Wärmeübertragung auf das Kühlmedium zu bewirken. Jeder Elektromotor 52 ist mit einer Zuleitung 67 und einer Ableitung 69 zum Zuführen beziehungsweise Abführen des Kühlmediums verbunden. Die Zuleitung 67 und die Ableitung 69 erstrecken sich von den Elektromotoren 52 durch die Lagerschilde 35 nach oben bis zu einer Verteileinrichtung 66 am Rahmen 32.

Die Verteileinrichtung 66 ist mit einer Zuführleitung 63 zum Zuführen des Kühlmediums und einer Abführleitung 64 zum Abführen des erwärmten Kühlmediums jeweils über die Kühlleitungsschläuche 62 mit der Kühleinrichtung 61 verbunden. Die Verteileinrichtung 66 kann schematisch dargestellte Stellventile 68 aufweisen, welche angesteuert von einer Steuereinheit bedarfsgerecht Kühlmedium zu den einzelnen Elektromotoren 52 zuführen und/oder abführen. Die Stellventile 68 können elektrisch ansteuerbare Ventile sein, welche insbesondere elektromagnetisch ansteuerbar sind.

An einzelnen Stellen an dem Elektromotor 52 und/oder am Kühlkreislauf 60 können Temperatursensoren zur unmittelbaren und/oder mittelbaren Erfassung der Temperatur jedes Elektromotors 52 angeordnet sein. Der mindestens eine Temperatursensor steht mit der Steuereinheit in Signalverbindung, welche entsprechend einer Programmvorgabe basierend auf den erfassten Temperaturwerten eine nicht dargestellte Kühlmittelpumpe, welche insbesondere auch am Rahmen 32 der Schlitzwandfräse 30 angeordnet sein kann, und/oder die Stellventile 68 der Verteileinrichtung 66 ansteuert, um so eine bedarfsgerechte Kühlung der einzelnen Elektromotore 52 zu erreichen.

Gemäß einer weiteren Ausgestaltung einer Schlitzwandfräse 30 nach Figur 6 kann von der Verteileinrichtung 66 auch eine Getriebekühlleitung 74 mit Kühlmedium versorgt werden. Die Getriebekühlleitung 74 erstreckt sich bis zu einem Wärmetauscher 70 in einem Getriebeinnenraum 59 des Getriebes 58 zum Antreiben der Fräsräder 40. Durch den Wärmetauscher 70, welcher vorzugsweise mit Wärmetauschrippen 72 ausgestattet ist, kann so auch das im Getriebeinnenraum 59 befindliche Getriebeöl, welches im Fräsbetrieb stark erwärmt wird, durch den bestehenden Kühlkreislauf 60 gekühlt werden. Hierdurch kann ein ansonsten notwendiger zusätzlicher Kreislauf für das Getriebeöl entfallen.

## Patentansprüche

1. Schlitzwandfräsvorrichtung mit einer Schlitzwandfräse (30) mit
- einem Rahmen (32),
- zwei Paaren von Fräsrädern (40), welche an einem unteren Bereich des Rahmens (32) drehbar gelagert sind,
- mindestens einem Fräsradantrieb (50), durch welchen die Fräsräder (40) drehend antreibbar sind, wobei der Fräsradantrieb (50) einen Elektromotor (52) zum Erzeugen der Drehbewegung aufweist, und
- einem Kühlkreislauf (60) zum Kühlen des mindestens einen Elektromotors (52) mit einem im Kühlkreislauf (60) geführten Kühlmedium,
**dadurch gekennzeichnet,**
- **dass** eine Steuereinheit zur Steuerung des Kühlkreislaufes (60) angeordnet ist,
- **dass** durch die Steuereinheit ein Betriebszustand des mindestens einen Elektromotors (52) erfassbar ist, und
- **dass** die Steuereinheit ausgebildet ist, abhängig von dem erfassten Betriebszustand einen Volumenstrom an Kühlmedium zu dem mindestens einen Elektromotor (52) variabel zu steuern.

2. Schlitzwandfräsvorrichtung nach Anspruch 1,
**dadurch gekennzeichnet,**
**dass** durch die Steuereinheit eine Kühlmediumpumpe gesteuert ist, welche ein Kühlmedium zu und/oder von dem mindestens einen Elektromotor (52) fördert.

3. Schlitzwandfräsvorrichtung nach Anspruch 1 oder 2,
**dadurch gekennzeichnet,**
**dass** durch die Steuereinheit mindestens ein Stellventil (68) gesteuert ist, durch welches ein Kreislaufstrom des Kühlmediums in einen ersten Teilstrom und mindestens einen zweiten Teilstrom variierbar aufgeteilt ist, wobei der erste Teilstrom zu dem mindestens einen Elektromotor (52) geleitet ist.

4. Schlitzwandfräsvorrichtung nach Anspruch 3,
**dadurch gekennzeichnet,**
**dass** mindestens ein zweiter Teilstrom an Kühlmedium zu einem Getriebe (58) des Fräsradantriebes (50) geleitet ist, um ein Getriebeöl in dem Getriebe (58) zu kühlen.

5. Schlitzwandfräsvorrichtung nach einem der Ansprüche 1 bis 4,
**dadurch gekennzeichnet,**
**dass** der Fräsradantrieb (50) ein Getriebe (58) mit einem Getriebegehäuse aufweist, in welchem mindestens ein Wärmetauscher (70), insbesondere für einen zweiten Teilstrom aus dem Kühlkreislauf (60), zum Kühlen des Getriebeöls angeordnet ist.

6. Schlitzwandfräsvorrichtung nach Anspruch 5,
**dadurch gekennzeichnet,**
**dass** der Wärmetauscher (70) innerhalb des Getriebegehäuses Wärmetauschrippen (72) aufweist.

7. Schlitzwandfräsvorrichtung nach einem der Ansprüche 1 bis 6,
**dadurch gekennzeichnet,**
**dass** mindestens ein Temperatursensor vorgesehen ist, welcher im Bereich des mindestens einen Elektromotors (52) zum Erfassen der Temperatur des Elektromotors (52) und/oder an dem Kühlkreislauf (60) zum Erfassen der Temperatur des Kühlmediums, insbesondere nach Austritt aus dem Elektromotor (52), angeordnet ist, und
**dass** der mindestens eine Temperatursensor mit der Steuereinheit in Verbindung steht.

8. Schlitzwandfräsvorrichtung nach einem der Ansprüche 1 bis 7,
**dadurch gekennzeichnet,**
**dass** durch die Steuereinheit eine Drehzahl und/oder ein Drehmoment zum Drehen der Fräsräder (40) zum Steuern des Kühlkreislaufs (60) erfassbar ist.

9. Schlitzwandfräsvorrichtung nach einem der Ansprüche 1 bis 8,
**dadurch gekennzeichnet,**
**dass** die Kühlmediumpumpe an einem Rahmen (32) der Schlitzwandfräse (30) angeordnet ist.

10. Schlitzwandfräsvorrichtung nach einem der Ansprüche 1 bis 9,
**dadurch gekennzeichnet,**
**dass** an dem Rahmen (32) im Bereich der Fräsräder (40) eine Zuführöffnung (38) zum Zuführen einer Suspension angeordnet ist und
**dass** die Schlitzwandfräse (30) zum Mischen von abgefrästem Boden mit zugeführter Suspension ausgebildet ist, um in dem Frässchlitz einen Bodenmörtel zu bilden.

11. Schlitzwandfräsvorrichtung nach einem der Ansprüche 1 bis 10,
**dadurch gekennzeichnet,**
**dass** ein Trägergerät (12) vorgesehen ist, an welchem die Schlitzwandfräse (30) gehalten ist, und
**dass** an dem Trägergerät (12) eine Kühleinrichtung zum Kühlen des Kühlmediums angeordnet ist.

12. Schlitzwandfräsvorrichtung nach einem der Ansprüche 1 bis 11,
**dadurch gekennzeichnet,**
**dass** jedem Fräsrad (40) ein Elektromotor (52) zugeordnet ist, welcher als ein Nabenmotor ausgebildet ist.

13. Verfahren zum Erstellen eines Frässchlitzes im Boden mit einer Schlitzwandfräsvorrichtung (10),
**dadurch gekennzeichnet,**
**dass** eine Schlitzwandfräsvorrichtung (10) nach einem der Ansprüche 1 bis 12 verwendet wird.

14. Verfahren nach Anspruch 13,
**dadurch gekennzeichnet,**
**dass** ein Volumenstrom an Kühlmedium zu dem Elektromotor (52) abhängig von einer Temperatur des Elektromotors (52) und/oder einer Temperatur des Kühlmediums und/oder einer Drehzahl und/oder einem Drehmoment zum Drehen der Fräsräder (40) gesteuert und eingestellt wird.

15. Verfahren nach Anspruch 13 oder 14,
**dadurch gekennzeichnet,**
**dass** in dem erstellten Frässchlitz eine Schlitzwand gebildet wird.

## Geänderte Patentansprüche

### Geänderte Patentansprüche gemäss Regel 137(2) EPÜ.

1. Schlitzwandfräsvorrichtung mit einer Schlitzwandfräse (30) mit
- einem Rahmen (32),
- zwei Paaren von Fräsrädern (40), welche an einem unteren Bereich des Rahmens (32) drehbar gelagert sind,
- mindestens einem Fräsradantrieb (50), durch welchen die Fräsräder (40) drehend antreibbar sind, wobei der Fräsradantrieb (50) einen Elektromotor (52) zum Erzeugen der Drehbewegung aufweist, und
- einem Kühlkreislauf (60) zum Kühlen des mindestens einen Elektromotors (52) mit einem im Kühlkreislauf (60) geführten Kühlmedium,
**dadurch gekennzeichnet,**
- **dass** eine Steuereinheit zur Steuerung des Kühlkreislaufes (60) angeordnet ist,
- **dass** durch die Steuereinheit ein Betriebszustand des mindestens einen Elektromotors (52) erfassbar ist,
und
- **dass** die Steuereinheit ausgebildet ist, abhängig von dem erfassten Betriebszustand einen Volumenstrom an Kühlmedium zu dem mindestens einen Elektromotor (52) variabel zu steuern.

2. Schlitzwandfräsvorrichtung nach Anspruch 1,
**dadurch gekennzeichnet,**
**dass** durch die Steuereinheit eine Kühlmediumpumpe gesteuert ist, welche ein Kühlmedium zu und/oder von dem mindestens einen Elektromotor (52) fördert.

3. Schlitzwandfräsvorrichtung nach Anspruch 1 oder 2,
**dadurch gekennzeichnet,**
**dass** durch die Steuereinheit mindestens ein Stellventil (68) gesteuert ist, durch welches ein Kreislaufstrom des Kühlmediums in einen ersten Teilstrom und mindestens einen zweiten Teilstrom variierbar aufgeteilt ist, wobei der erste Teilstrom zu dem mindestens einen Elektromotor (52) geleitet ist.

4. Schlitzwandfräsvorrichtung nach Anspruch 3,
**dadurch gekennzeichnet,**
**dass** der mindestens eine zweite Teilstrom an Kühlmedium zu einem Getriebe (58) des Fräsradantriebes (50) geleitet ist, um ein Getriebeöl in dem Getriebe (58) zu kühlen.

5. Schlitzwandfräsvorrichtung nach einem der Ansprüche 1 bis 4,
**dadurch gekennzeichnet,**
**dass** der Fräsradantrieb (50) ein Getriebe (58) mit einem Getriebegehäuse aufweist, in welchem mindestens ein Wärmetauscher (70), insbesondere für einen zweiten Teilstrom aus dem Kühlkreislauf (60), zum Kühlen des Getriebeöls angeordnet ist.

6. Schlitzwandfräsvorrichtung nach Anspruch 5,
**dadurch gekennzeichnet,**
**dass** der Wärmetauscher (70) innerhalb des Getriebegehäuses Wärmetauschrippen (72) aufweist.

7. Schlitzwandfräsvorrichtung nach einem der Ansprüche 1 bis 6,
**dadurch gekennzeichnet,**
**dass** mindestens ein Temperatursensor vorgesehen ist, welcher im Bereich des mindestens einen Elektromotors (52) zum Erfassen der Temperatur des Elektromotors (52) und/oder an dem Kühlkreislauf (60) zum Erfassen der Temperatur des Kühlmediums, insbesondere nach Austritt aus dem Elektromotor (52), angeordnet ist, und
**dass** der mindestens eine Temperatursensor mit der Steuereinheit in Verbindung steht.

8. Schlitzwandfräsvorrichtung nach einem der Ansprüche 1 bis 7,
**dadurch gekennzeichnet,**
**dass** durch die Steuereinheit eine Drehzahl und/oder ein Drehmoment zum Drehen der Fräsräder (40) zum Steuern des Kühlkreislaufs (60) erfassbar ist.

9. Schlitzwandfräsvorrichtung nach einem der Ansprüche 1 bis 8,
**dadurch gekennzeichnet,**
**dass** die Kühlmediumpumpe an einem Rahmen (32) der Schlitzwandfräse (30) angeordnet ist.

10. Schlitzwandfräsvorrichtung nach einem der Ansprüche 1 bis 9,
**dadurch gekennzeichnet,**
**dass** an dem Rahmen (32) im Bereich der Fräsräder (40) eine Zuführöffnung (38) zum Zuführen einer Suspension angeordnet ist und
**dass** die Schlitzwandfräse (30) zum Mischen von abgefrästem Boden mit zugeführter Suspension ausgebildet ist, um in dem Frässchlitz einen Bodenmörtel zu bilden.

11. Schlitzwandfräsvorrichtung nach einem der Ansprüche 1 bis 10,
**dadurch gekennzeichnet,**
**dass** ein Trägergerät (12) vorgesehen ist, an welchem die Schlitzwandfräse (30) gehalten ist, und
**dass** an dem Trägergerät (12) eine Kühleinrichtung zum Kühlen des Kühlmediums angeordnet ist.

12. Schlitzwandfräsvorrichtung nach einem der Ansprüche 1 bis 11,
**dadurch gekennzeichnet,**
**dass** jedem Fräsrad (40) ein Elektromotor (52) zugeordnet ist, welcher als ein Nabenmotor ausgebildet ist.

13. Verfahren zum Erstellen eines Frässchlitzes im Boden mit einer Schlitzwandfräsvorrichtung (10),
**dadurch gekennzeichnet,**
**dass** eine Schlitzwandfräsvorrichtung (10) nach einem der Ansprüche 1 bis 12 verwendet wird.

14. Verfahren nach Anspruch 13,
**dadurch gekennzeichnet,**
**dass** ein Volumenstrom an Kühlmedium zu dem Elektromotor (52) abhängig von einer Temperatur des Elektromotors (52) und/oder einer Temperatur des Kühlmediums und/oder einer Drehzahl und/oder einem Drehmoment zum Drehen der Fräsräder (40) gesteuert und eingestellt wird.

15. Verfahren nach Anspruch 13 oder 14,
**dadurch gekennzeichnet,**
**dass** in dem erstellten Frässchlitz eine Schlitzwand gebildet wird.
